# EUROPEAN PATENT SPECIFICATION

(11) **EP 0 372 689 B1**
(45) Date of publication and mention of the grant of the patent: **02.03.1994**
(21) Application number: 89309987.9
(22) Date of filing: 29.09.1989
(51) Int. Cl.: G01M 11/00, G01L 1/24

(54) **Optical fibre monitoring**
Optische Faser-Überwachung
Contrôle de fibre optique

(30) Priority: 07.12.1988 GB 8828505
(43) Date of publication of application: 13.06.1990
(60) Divisional application: 93104207.1
(73) Proprietor: BICC Public Limited Company, London W1X 5FH (GB)
(72) Inventor: Myers, David Lister, Frodsham Warrington (GB); Grigsby, Richard, Tarvin Chester CH3 8JS (GB); Handford, John, Elton Chester CH2 9PD (GB)
(74) Representative: Dlugosz, Anthony Charles

(56) References cited:
- EP-A- 0 190 922
- EP-A- 0 240 100
- EP-A- 0 291 962
- GB-A- 2 186 994
- US-A- 4 672 198
- OPTICAL FIBER COMMUNICATIONS - Principles and Practice, John Senior (1985), page 76

## Description

This invention relates to the monitoring of optical fibres and is particularly concerned with apparatus for and a method of detecting whether or not an optical fibre is carrying a light signal.

An optical fibre comprises a core of material transparent to light, usually in the infra-red region. It is clad by a material of a refractive index lower than that of the material of the core so that light is constrained to travel down the fibre by reflection from the cladding. By modulating the light, that is altering its amplitude or other characteristics, signals may be transmitted down the fibre. These signals may be used for a variety of purposes, from television broadcasts to computer data transmission.

There is frequently a requirment to detect whether or not a fibre is in service. One reason for this might be the case where a multiplicity of optical fibres is installed at the same time, but only a small number used. If one of the fibres in use becomes damaged or degraded in some way, then it can be replaced by a fibre not in use. If the repair is to be carried out some way along the route, it is important to detect which fibres carry no traffic and are therefore available for use as spares.

A number of devices for testing optical fibres have been described. For example EP-A-223,332 to Northern Telecom Ltd, and US-A-4,672,198 to AT&T each disclose devices which comprise means for bending an optical fibre (microbending in the case of US-A-4,672,198) and means for detecting light escaping from the fibre, for example a photodiode coupled to an operational amplifier whose output drives an LED.

EP-A- 0291962 discloses a method of investigation of birefringence in an optical fibre, in which a mechanical stressing system impinged on a fibre and, by applying a constant force, causes the fibre to deform (undulate). The light escaping through microbending at the point of deformation is monitored by a detector and a computer controls the position of the stressing system along the fibre. The extent of microbending is not gradually increased.

It is an object of the present invention to provide improved apparatus for detecting whether or not an optical fibre is carrying a light signal, which improved apparatus can be used without causing undue disruption of the signal if one is present.

According to the invention, the improved apparatus comprises bending means for subjecting at least a portion of an optical fibre to microbending of a gradually increasing extent; which bending means comprises an anvil having a face including one or more than one undulation and pressure applying means for urging the undulating face of the anvil and the fibre one against the other; first detecting means for detecting light escaping from the fibre; and, operatively coupled to the first detecting means and to the bending means, a control unit which will give an output indication on receipt of a signal from the first detecting means that light escaping from the fibre has been detected and which, on receipt of said signal, will stop the bending means from further increasing the extent of microbending of said portion of the fibre.

Preferably, the improved apparatus also includes second detecting means for detecting when the fibre has been subjected to a predetermined maximum amount of microbending, the arrangement being such that if the second detecting means detects that the fibre has been subjected to its predetermined maximum amount of microbending and no signal has been received from the first detecting means, a signal is sent to the control unit which stops the bending means from further increasing the amount of deformation of the fibre and gives a second output indication.

The improved apparatus of the invention makes use of the phenonema known as microbending, which is the escape of light through the cladding of an optical fibre due to deformation of the fibre. Microbending involves bending of the fibre through a radius of an order of magnitude similar to the radius of the fibre itself, normally at one or more than one discrete pressure point. This is in contrast to macrobending, which is bending of the fibre through a radius typically not less than ten times the radius of the fibre itself.

By virtue of the fact that, on receipt of a signal that light has been detected by the first detecting means, the control unit stops the bending means from further increasing the extent of microbending of the portion of the optical fibre, escape of most of the light from the optical fibre and consequential disruption of the signal transmitted along the fibre is limited. furthermore, the predetermined maximum amount of microbending which is detected by the second bending means can be preset at a level at which the disruption to the signal transmitted along the fibre is at an acceptably low level.

As stated above, the bending means comprises an anvil having a face including one or more than one undulation and pressure applying means for urging the undulating face of the anvil and an optical fibre one against the other. Conveniently, the pressure applying means is adapted to apply pulses of pressure to urge the undulating face of the anvil and an optical fibre one against the other. In one convenient arrangement, the pressure applying means comprises a pressure member, the arrangement being such that the optical fibre is constrained between the pressure member and the undulating face of the anvil.

The improved apparatus of the invention preferably includes second bending means for causing a second portion of an optical fibre to be subjected to macrobending to a predetermined fixed extent, the extent of macrobending being insufficient, by itself, to cause a substantial amount of light to escape from the fibre, and preferably also the first detecting means is in the location of the second bending means.

Microbending of an optical fibre has the advantage that it is relatively insensitive to the wavelength of light transmitted along the fibre and to the fibre characteristics such as mode field radius and cut-off wavelength. Further, microbending does possess the disadvantage that the leaked light is relatively difficult to collect efficiently. The additional macrobending of an optical fibre, with the associated more predictable leakage, serves to facilitate light detection.

One preferred form of the improved apparatus for detecting whether or not an optical fibre is carrying a light signal comprises first bending means for subjecting at least a portion of an optical fibre to microbending of a gradually increasing extent; second bending means for causing a second portion of the optical fibre to be subjected to macrobending to a predetermined fixed extent, the extent of macrobending being insufficient, by itself, to cause a substantial amount of light to escape from the optical fibre; first detecting means for detecting light escaping from the fibre, the first detecting means being in the location of the second bending means; and, operatively coupled to the first detecting means and to the first bending means, a control unit which will give an output indication on receipt of a signal from the first detecting means that light escaping from the fibre has been detected and which, on receipt of said signal, will stop the first bending means from further increasing the extent of microbending of said portion of the fibre.

The aforesaid preferred form of the improved apparatus preferably also includes second detecting means for detecting when the fibre has been subjected to a predetermined maximum amount of microbending, the arrangement being such that if the second detecting means detects that the fibre has been subjected to its predetermined maximum amount of microbending and no signal has been received from the first detecting means, a signal is sent to the control unit which stops the first bending means from further increasing the amount of deformation of the fibre and gives a second output indication.

In a second preferred form of apparatus, the apparatus is in combination with an optical fibre comprising a core surrounded by a cladding, wherein the radius of curvature of the bend of the fibre in the portion of the fibre subjected to microbending is less than five times the thickness of the cladding of the fibre.

The second preferred form of the improved apparatus preferably further includes second bending means for causing a further portion of an optical fibre to be subjected to macrobending to a predetermined fixed extent, which second bending means is adapted to bend the fibre over a second longitudinal region substantially longer than the or each first longitudinal region to such an extent that the radius of the bend in the second longitudinal region is at least ten times the thickness of the cladding of the fibre, the extent of macrobending in the second longitudinal region being insufficient, by itself, to cause a substantial amount of light to escape from the fibre and, preferably also, the first detecting means is in the location of the second bending means.

The invention is further illustrated by a description, by way of example, of two preferred embodiments of the improved apparatus for detecting whether or not an optical fibre is carrying a light signal, with reference to the accompanying drawings, in which:-
Figure 1 shows a schematic diagram of the first preferred embodiment of the improved apparatus, and
Figure 2 shows a schematic diagram of the second preferred embodiment of the improved apparatus.

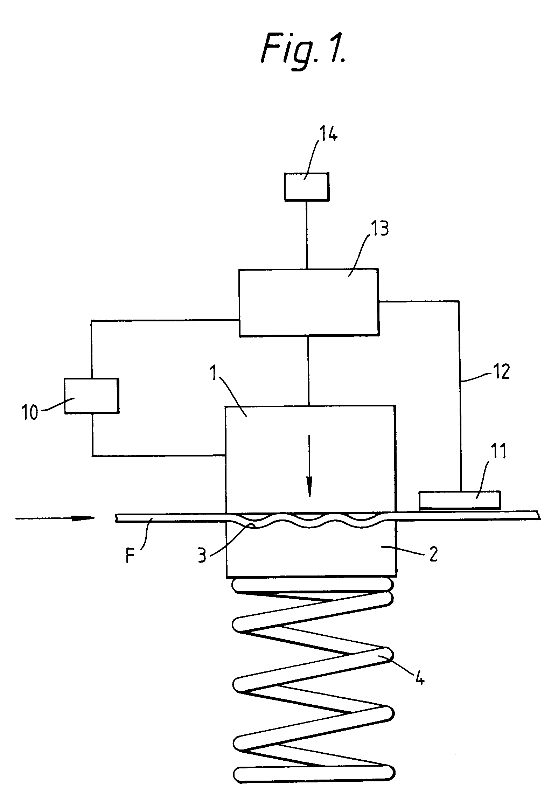

Referring to Figure 1, the first preferred embodiment of the improved apparatus comprises a movable pressure member 1 and an anvil 2 having an undulating face 3. The anvil 2 is biased towards the pressure member 1 by means of a spring 4, whilst the pressure member 1 is driven towards the anvil 2 by means of a motor 10. The motor 10 causes a pressure member 1 to be urged towards the anvil 2 in a pulsed movement, with pulses of gradually increasing amplitude. A photodetector 11 positioned immediately downstream of the anvil 2 is adapted to detect light escaping from an optical fibre, the photodetector being operatively coupled via a line 12 to a microprocessor 13, which is itself operatively coupled to the motor 10. The microprocessor 9 is also operatively coupled to a display unit 14.

In use, an optical fibre F is constrained between the movable pressure member 1 and the undulating face 3 of the anvil 2 and the motor 10 urges the pressure member 1 against the optical fibre which is itself urged against the undulating face 3 of the anvil 2 in a pulsed movement, with pulses of gradually increasing amplitude. If there is a light signal on the optical fibre F, the increasing amplitude of the pulses from the pressure member 1 will begin to disturb the transmission properties of the fibre, causing light to leak from the fibre into its cladding due to microbending. The light will begin to emerge from the cladding of the fibre F and escaping light will be detected by the photodetector 11 which sends a signal via line 12 to the microprocessor 13. The microprocessor 13 causes the motor 10 to stop the increase in the amplitude of the pressure pulses to the pressure member 1 and sends a corresponding signal to the display unit 14.

The microprocessor 13 also monitors the pressure pulses being applied to the optical fibre F by the pressure member 1. If a predetermined maximum amplitude is reached without a signal being received from the photodetector 11, the microprocessor 13 concludes that there is no light signal on the optical fibre F, and sends a corresponding alternative signal to the display unit 14.

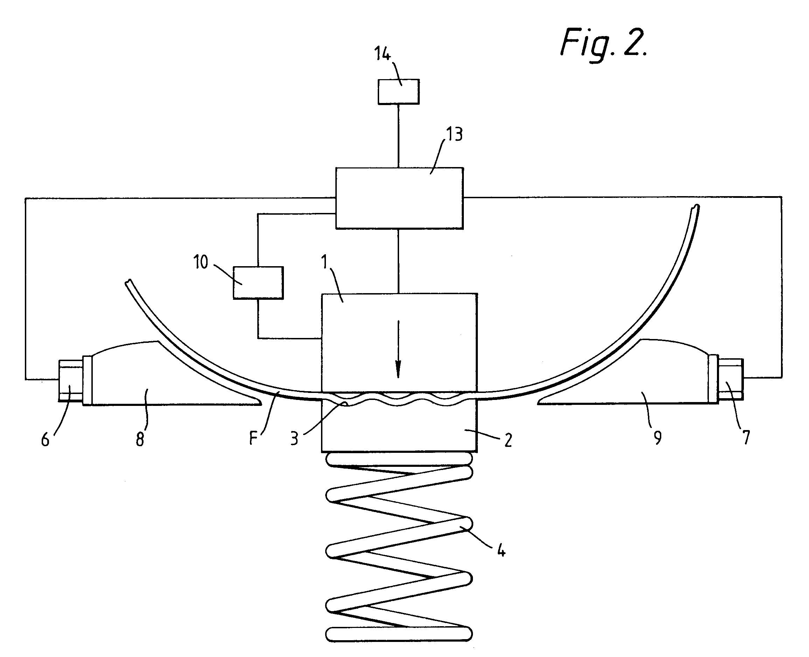

Referring to Figure 2, parts of the second preferred embodiment of the improved apparatus identical to corresponding parts of the first preferred embodiment are given the same reference numerals. The pressure applying mechanism of the second preferred embodiment is identical to that of the first embodiment, producing microbending of an optical fibre F so as to cause light carried thereby to leak into the cladding of the fibre. However, the second preferred embodiment also includes, on opposite sides of the pressure member 1 and anvil 2, light guides 8 and 9 each of such a shape that an optical fibre F bearing against a face of the light guide is subjected to macrobending. The light guide 8 is operatively coupled to the microprocessor 13 via a photodetector 6 and the light guide 9 is operatively coupled to the microprocessor by a photodetector 7.

The macrobends to which the optical fibre F is subjected by the light guides 8 and 9 in themselves are of sufficiently large radius that, without the microbending caused by the pressure member 1 and anvil 2, any light signal in the fibre would not be disrupted. However, if there is a light signal present in the optical fibre F, the microbending caused by the pressure bending 1 and anvil 2 allows light out of the core into the cladding and this light is shed from the cladding over a short distance and on one side of the fibre due to the macrobending caused by the light guide 8 or 9. This more predictable escape of light can easily be detected by the photodetector 6 or 7 which sends a signal to the microprocessor 13 as before.

The provision of two light guides 8 and 9 for producing macrobends in an optical fibre F and two photodetectors 6 and 7 have the advantage that a light signal can be detected regardless of its direction of travel along the fibre.

## Claims

1. Apparatus for detecting whether or not an optical fibre (F) is carrying a light signal, which apparatus comprises bending means (1,2) for subjecting at least a portion of an optical fibre to microbending; which bending means comprises an anvil (2) having a face, pressure applying means (1) for urging the face of the anvil and the fibre one against the other to cause the fibre to undulate; first detecting means (11,6,7) for detecting light escaping from the fibre; and a control unit (13) operatively coupled to the first detecting means and to the bending means, which control unit will give an output indication on receipt of a signal from the first detecting means that light escaping from the fibre has been detected characterised in that the bending means can subject the optical fibre to microbending of a gradually increasing extent, that, on receipt of said signal, the control unit(13) will stop the bending means (1,2) from further increasing the extent of microbending of said portion of the fibre and in that the face of the anvil includes one or more than one undulation (3).

2. Apparatus as claimed in Claim 1, wherein the apparatus also includes second detecting means (13) for detecting when the fibre has been subjected to a predetermined maximum amount of microbending, the arrangement being such that if the second detecting means detects that the fibre has been subjected to its predetermined maximum amount of microbending and no signal has been received from the first detecting means, a signal is sent to the control unit which stops the bending means from further increasing the amount of deformation of the fibre and gives a second output indication.

3. Apparatus as claimed in Claim 1 or 2, wherein the pressure applying means (1) is adapted to apply pulses of pressure to urge the undulating face (3) of the anvil (2) and an optical fibre (F) one against the other.

4. Apparatus as claimed in Claim 2 or 3, wherein the pressure applying means (1) comprises a pressure member, the arrangement being such that an optical fibre (F) can be constrained between the pressure member and the undulating face (3) of the anvil (2).

5. Apparatus as claimed in any one of the preceding Claims, wherein the apparatus also includes second bending means (8,9) for causing a second portion of an optical fibre (F) to be subjected to macrobending to a predetermined fixed extent, the extent of macrobending being insufficient, by itself, to cause a substantial amount of light to escape from the fibre, and wherein the first detecting means is in the location of the second bending means.

6. Apparatus as claimed in any one of Claims 1 to 5 in combination with the optical fibre (F), wherein the optical fibre comprises a core surrounded by a cladding and the radius of curvature of the bend of the fibre in the portion of the fibre subjected to microbending is less than five times the thickenss of the cladding of the fibre.

7. Apparatus as claimed in Claim 6, which also includes second bending means (8,9) for causing a further portion of the optical fibre (F) to be subjected to macrobending to a predetermined fixed extent, which second bending means is adapted to bend the fibre over a second longitudinal region substantially longer than the portion of the fibre that is subjected to microbending to such an extent that the radius of curvature of the bend in the second longitudinal region is at least ten times the thickness of the cladding of the fibre, the extent of macrobending in the second longitudinal region being insufficient, by itself, to cause a substantial amount of light to escape from the fibre, and wherein the first detecting means (6,7) is in the location of the second bending means (8,9).

## Patentansprüche

1. Vorrichtung zur Ermittlung ob oder ob nicht eine optische Faser (F) ein Lichtsignal führt, wobei die Vorrichtung aufweist: eine Biegeeinrichtung (1,2), um mindestens einen Abschnitt einer optischen Faser einer Mikrobiegung zu unterwerfen, wobei die Biegeeinrichtung einen Amboß (2) mit einer Fläche und eine Druckbeaufschlagungseinrichtung (1) zum Drücken der Fläche des Amboß und der Faser gegeneinander aufweist, um zu bewirken, daß die Faser gewellt wird; eine erste Detektoreinrichtung (11,6,7) zur Ermittlung von Licht, das aus der Faser austritt; und eine Steuereinheit (13), die betriebsmäßig mit der ersten Detektoreinrichtung und der Biegeeinrichtung verbunden ist, wobei die Steuereinheit eine Ausgangsanzeige beim Empfang eines Signals von der ersten Detektoreinrichtung abgibt, wenn Licht, das aus der Faser austritt, ermittelt worden ist, dadurch gekennzeichnet, daß die Biegeeinrichtung die optische Faser einer Mikrobiegung mit graduell ansteigendem Ausmaß unterwerfen kann, daß beim Empfang des Signals die Steuereinheit (13) die Biegeeinrichtung (1,2) gegenüber einem weiteren Ansteigen des Ausmaßes der Mikrobiegung des Faserabschnitts stoppt und daß die Fläche des Amboß eine oder mehr als eine Welle (3) aufweist.

2. Vorrichtung nach Anspruch 1, wobei die Vorrichtung eine zweite Detektoreinrichtung (13) aufweist, um zu ermitteln, wenn die Faser einem vorgegebenen maximalen Betrag einer Mikrobiegung unterworfen worden ist, wobei die Anordnung derart aufgebaut ist, daß dann, wenn die zweite Detektoreinrichtung ermittelt, daß die Faser ihrem vorgegebenen maximalen Betrag der Mikrobiegung unterworfen worden ist und kein Signal von der ersten Detektoreinrichtung empfangen worden ist, ein Signal zu der Steuereinheit abgegeben wird, die die Biegeeinrichtung gegen ein weiteres Ansteigen des Betrags der Deformation der Faser stoppt und eine zweite Ausgangsanzeige abgibt.

3. Vorrichtung nach Anspruch 1 oder 2, wobei die Druckbeaufschlagungseinrichtung (1) dazu geeignet ist, Druckimpulse abzugeben, um die wellenförmige Fläche (3) des Amboß (2) und eine optische Faser (F) gegeneinander zu drücken.

4. Vorrichtung nach Anspruch 2 oder 3, wobei die Druckbeaufschlagungseinrichtung (1) ein Druckteil aufweist, wobei die Anordnung derart ist, daß eine optische Faser (F) zwischen dem Druckteil und der wellenförmigen Fläche (3) des Amboß (2) eingespannt werden kann.

5. Vorrichtung nach einem der vorhergehenden Ansprüche, wobei die Vorrichtung auch eine zweite Biegeeinrichtung (8,9) umfaßt, um zu bewirken, daß ein zweiter Abschnitt einer optischen Faser (F) einer Makrobiegung in einem vorgegebenen, festen Ausmaß unterworfen wird, wobei das Ausmaß der Makrobiegung selbst nicht ausreichend ist, um zu bewirken, daß ein wesentlicher Anteil des Lichts aus der Faser austritt, und wobei sich die erste Detektoreinrichtung an der Stelle der zweiten Biegeeinrichtung befindet.

6. Vorrichtung nach einem der Ansprüche 1 bis 5 in Verbindung mit einer optischen Faser (F) , wobei die optische Faser einen Kern mit einem umgebenden Mantel aufweist und wobei der Krümmungsradius der Biegung der Faser in dem Faserabschnitt, der einer Mikrobiegung unterworfen wird, geringer als das Fünffache der Dicke des Fasermantels ist.

7. Vorrichtung nach Anspruch 6, die auch eine zweite Biegeeinrichtung (8,9) aufweist, um zu bewirken, daß ein weiterer Abschnitt der optischen Faser (F) einer Makrobiegung in einem vorgegebenen, festen Ausmaß unterworfen wird, wobei die zweite Biegeeinrichtung dazu geeignet ist, die Faser über einen zweiten, sich längs erstreckenden Abschnitt zu biegen, der wesentlich länger als der Faserabschnitt ist, der der Mikrobiegung unterworfen wird, in einem solchen Ausmaß, daß der Krümmungsradius der Biegung in dem zweiten sich längs erstreckenden Abschnitt mindestens dem Zehnfachen der Dicke des Fasermantels entspricht, wobei das Ausmaß der Makrobiegung in dem zweiten sich längs erstreckenden Abschnitt selbst nicht ausreichend ist, um zu bewirken, daß ein wesentlicher Anteil des Lichts aus der Faser austritt, und wobei sich die erste Detektoreinrichtung (6,7) an der Stelle der zweiten Biegeeinrichtung (8,9) befindet.

## Revendications

1. Appareil pour détecter si une fibre optique (F) transporte ou ne transporte pas de signal lumineux, appareil qui comprend des moyens de cintrage (1, 2) pour soumettre au moins une partie d'une fibre optique à un micro-cintrage, moyens de cintrage qui comprennent une enclume (2) avec une face, un moyen (1) d'application de la pression pour pousser la face de l'enclume et la fibre l'une contre l'autre afin d'amener la fibre à s'onduler, un premier moyen de détection (11, 6, 7) pour détecter de la lumière s'échappant de la fibre, et un organe de commande (13) couplé de façon opérationnelle au premier moyen de détection et aux moyens de cintrage, organe de commande qui va donner une indication en sortie, à la réception d'un signal en provenance du premier moyen de détection, disant que de la lumière s'échappant de la fibre a été détectée, caractérisé en ce que les moyens de cintrage peuvent soumettre la fibre optique à un microcintrage de valeur progressivement croissante, en ce que, à la réception dudit signal, l'organe de commande (13) va empêcher les moyens de cintrage (1, 2) d'augmenter davantage la valeur du micro-cintrage de ladite partie de fibre, et en ce que la face de l'enclume comprend une ou plusieurs ondulations (3).

2. Appareil selon la revendication 1, dans lequel l'appareil inclut également un second moyen de détection (13) pour détecter le moment où la fibre a été soumise à une valeur maximale prédéterminée de micro-cintrage, la disposition étant telle que si le second moyen de détection détecte que la fibre a été soumise à sa valeur maximale prédéterminée de micro-cintrage et si aucun signal n'a été reçu en provenance du premier moyen de détection, un signal est envoyé à l'organe de commande qui va empêcher les moyens de cintrage d'augmenter davantage la valeur de la déformation de la fibre et va donner une seconde indication de sortie.

3. Appareil selon la revendication 1 ou 2, dans lequel le moyen d'application de la pression (1) est apte à appliquer des impulsions de pression pour pousser la face ondulée (3) de l'enclume (2) et une fibre optique (F) l'une contre l'autre.

4. Appareil selon la revendication 2 ou 3, dans lequel le moyen (1) d'application de la pression comprend un élément presseur, la disposition étant telle qu'une fibre optique (F) peut être retenue entre l'élément presseur et la face ondulée (3) de l'enclume (2).

5. Appareil selon l'une quelconque des précédentes revendications, dans lequel l'appareil comprend également des seconds moyens de cintrage (8, 9) pour amener une seconde partie de la fibre optique (F) à être soumise à un macrocintrage de valeur fixe prédéterminée, la valeur du macrocintrage étant insuffisante par elle-même pour amener une quantité substantielle de lumière à s'échapper de la fibre, et dans lequel le premier moyen de détection se trouve à l'emplacement du second moyen de cintrage.

6. Appareil selon l'une quelconque des revendications 1 à 5, associé à la fibre optique (F) dans lequel la fibre optique comprend un coeur entouré par une gaine et le rayon de courbure du cintrage de la fibre dans la partie de la fibre soumise au micro-cintrage est inférieur à cinq fois l'épaisseur de la gaine de la fibre.

7. Appareil selon la revendication 6, qui comprend également des seconds moyens de cintrage (8, 9) pour amener une autre partie de la fibre optique (F) à être soumise à un macro-cintrage de valeur fixe prédéterminée, second moyen de cintrage qui est apte à courber la fibre sur une seconde région longitudinale sensiblement plus longue que la partie de la fibre qui est soumise au micro-cintrage jusqu'à une valeur telle que la rayon de courbure du cintrage dans la seconde région longitudinale vaut au moins dix fois l'épaisseur de la gaine de la fibre, la valeur du macro-cintrage dans la seconde région longitudinale étant insuffisante par elle-même pour amener une quantité substantielle de lumière à s'échapper de la fibre, et dans lequel les premiers moyens de détection (6, 7) se trouvent à l'emplacement des seconds moyens de cintrage (8, 9).
